# EUROPEAN PATENT APPLICATION

(11) **EP 1 643 757 A1**
(43) Date of publication of application: **05.04.2006**
(21) Application number: 05255787.3
(22) Date of filing: 19.09.2005
(51) Int. Cl.: H04N 5/232, H04N 5/32

(54) **Systems and methods for dynamic optimization of image**

(30) Priority: 30.09.2004 US 955409
(71) Applicant: GENERAL ELECTRIC COMPANY, Schenectady, New York 12345 (US)
(72) Inventor: Zelakiewicz, Scott Stephen, Niskayuna, NY 12309 (US); Mohr, Gregory Alan, West Chester, OH 45069 (US); Hopkins, Forrest Frank, Scotia, NY 12302 (US); Bueno, Clifford, Clifton Park, NY 12065 (US); Fitzgerald, Paul Francis, Schenectady, NY 12308 (US); Couture, Aaron Judy, Schenectady, NY 12305 (US)
(74) Representative: Pedder, James Cuthbert

(57) **Abstract**

An imaging system (10) for dynamically optimizing an image is provided. The imaging system (10) includes a source of radiation (12), and a detector assembly (24) configured to generate an image signal based on an incidence of radiation on a scintillator assembly (24). At least one or more properties of the generated image signal are determined from the incidence of radiation on the detector assembly. The one or more properties of the image signal may also be determined from one or more detector operational parameters (40). The imaging system (10) also includes a detector adjustment circuitry (34) that is configured to adjust the one or more detector operational parameters (40) based on the generated image signal (50).

## Description

The invention relates generally to the field of non-destructive imaging and more specifically to the field of industrial imaging. In particular, the present invention relates to the field of detector operation in non-invasive imaging.

Various types of imaging systems, such as X-ray imaging systems, computed tomography (CT) imaging systems, ultrasound imaging systems, and optical imaging systems, are often used for performing industrial inspections. For example, in industrial inspection processes, the imaging systems may be used to non-destructively determine a variety of physical characteristics of objects, such as wall thickness, shape, size, and location of internal structures or formations, and defects in an object and/or parts of an object.

ln performing industrial inspections with currently existing technologies, a qualified and skilled operator may not always have knowledge of the physical characteristics of an object undergoing an inspection. Without such knowledge, the system operator may not be able to suitably configure different components of the imaging system, such as the detector, to provide the desired image quality. Instead, the operator may have to perform repeated imaging operations and adjust the settings of the different components based on the results of each operation until the desired image quality is attained. This process may be time consuming and inefficient in industrial or large-scale operations.

Therefore, there is a need for an imaging system that reduces the time consumed in performing an imaging process by reducing the involvement of the system operator and produces a desired image of the object.

In accordance with certain embodiments of the present invention, an imaging system may include at least one of a source of radiation and a detector assembly configured to generate an image signal. At least one or more properties of the generated image signal are determined from the incident radiation on the detector assembly and on one or more detector operational parameters. The imaging system also includes detector adjustment circuitry that is configured to adjust the one or more detector operational parameters based on the generated image signal.

In accordance with certain other embodiments of the present invention, a method for adjusting one or more detector operating parameters in an imaging system is provided. The method includes generating an analog image signal based on an incident radiation on a detector assembly, converting the analog image signal to a digital image signal and dynamically adjusting at least the generation of the analog image signal and the conversion of the analog image signal into a digital image signal.

ln accordance with yet another embodiment of the present invention, a method for inspecting an object in real-time using the imaging system is provided. The method includes the steps of introducing the object between a source of radiation and a detector assembly and acquiring one or more image signals based on at least an incident radiation on the detector assembly and on one or more detector operating parameters. The method further involves adjusting the one or more detector operating parameters based on the acquired one or more image signals and generating one or more optimized image signals based on the adjusted one or more detector operating parameters.

The invention will now be described in greater detail, by way of example, with reference to the drawings, in which:-
FIG. 1 is a diagrammatical illustration of an exemplary embodiment of an imaging system capable of dynamic adjustment of one or more detector operating parameters;
FIG. 2 is a diagrammatical illustration of another exemplary embodiment of an imaging system capable of dynamic adjustment of one or more detector operating parameters; and
FIG. 3 is flowchart illustrating steps of a method for dynamic adjustment of one or more detector operating parameters in an imaging system, as illustrated in FIGS. 1 and 2.

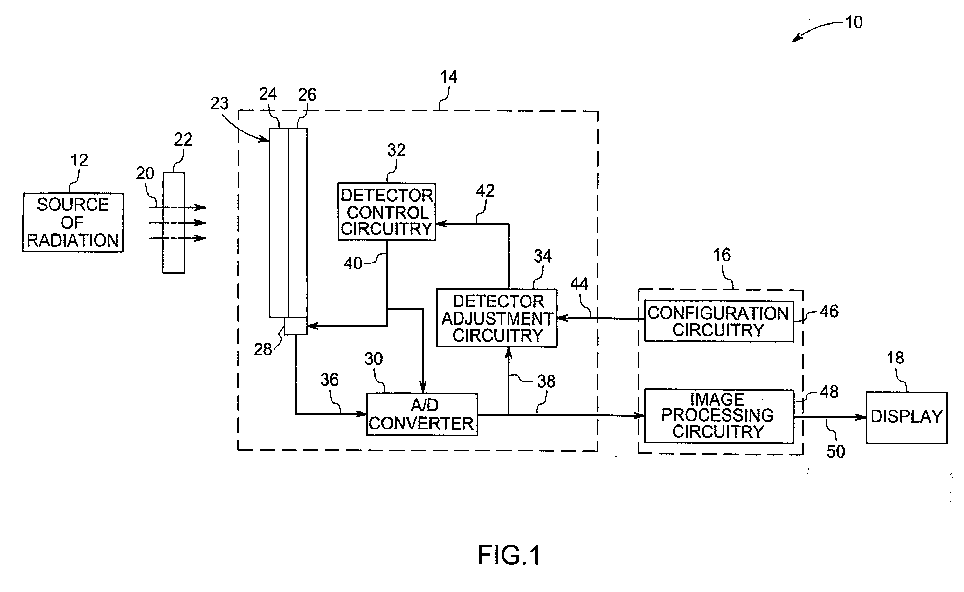

Turning now to the drawings and referring first to FIG. 1, an exemplary embodiment of an imaging system. 10 is shown as comprising a source of radiation 12, a detector assembly 14, a processor assembly 16, and a display unit 18.

Under certain aspects of the present technique, the source of radiation 12 is adapted to emit radiation 20 onto an object 22 under inspection by the imaging system 10. The emitted radiation 20 may include any one of the following: an X-ray radiation, an ultra-violet radiation, an infrared radiation, a gamma ray radiation, other types of electromagnetic radiation or a neutron beam. The choice of the type of radiation 20 employed is based on the ability of the radiation to pass through the object 22 under inspection and to be attenuated by the object 22. In particular, it is generally desirable for the radiation 20 to pass through the object 22 so that it may be subsequently detected and for the radiation 20 to be differentially attenuated by the object 22 so that information may be obtained concerning the internal structure and composition of the object 22.

The emitted radiation 20 impacts a detector unit 23 in the detector assembly 14. ln one embodiment of the present technique, the detector unit 23 includes a scintillator assembly 24, a photodetector assembly 26, read-out circuitry 28, an analog-to-digital converter (ADC) 30, detector control circuitry 32, and detector adjustment circuitry 34. In this embodiment, the detector unit 23 employs what is known as indirect conversion where the radiation incident on the scintillator assembly 24 is first converted to an optical signal in the form of photons of light, and then converted again to processable electrical signals by the photodetector assembly 26. ln another exemplary embodiment of the present technique, the radiation incident on the detector unit 23 may directly be converted to processable electrical signals. Each of the above-described assemblies and circuitries are described in greater detail below.

In the depicted embodiment, the scintillator assembly 24 includes a plurality of scintillator units that are adapted to detect the radiation 20 emitted from the source of radiation 12 that passes through the object 22 under inspection. ln one implementation, the scintillator assembly 24 may include an array of individual scintillator units, each unit configured to emit photons when stimulated by incident radiation 22. ln another implementation, the scintillator assembly 24 may be a single and large scintillator unit. Examples of suitable scintillator materials include sodium iodide, thallium-doped cesium iodide, and calcium fluoride. Examples of the elements in the scintillator material that can be readily excited by the radiation include sodium, thallium, and cerium. The optical photons generated by the scintillator crystals of the scintillator assembly 24 is directed to the photodetector assembly 26.

While the foregoing discussion describes an embodiment of the present technique where the detector assembly 14 includes the scintillator assembly 24 and the photodetector assembly 26 to facilitate an indirect conversion of information in the form of radiation 22 to discernible electrical signals, it should be considered only as an exemplary case. The present technique may also be effectively carried out with a detector unit 23 employing direct conversion of the radiation incident on the detector to electrical signals, as described in greater detail below.

Returning now to Fig. 1, the photodetector assembly 26 is coupled to the scintillator assembly 24 and is adapted to detect the light emitted from the plurality of scintillator units in the scintillator assembly 24. The scintillator assembly 24 and the corresponding photodetector assembly 26 may be generally referred to as the detector unit 23 and in the following discussion under the current embodiment, the term 'detector unit' 23 may be construed as meaning the same. ln certain embodiments of the present technique, the photodetector assembly 26 may be a complementary metal oxide semiconductor (CMOS) device adapted to detect the light and to generate electrical signals corresponding to the detected light signals, while in certain other embodiments, the photodetector assembly may be an amorphous silicon technology-based device. The photodetector assembly 26 typically includes a plurality of photoreceiver units, typically photodiodes, that are each positioned and aligned with each of the plurality of scintillator crystals. Each photoreceiver unit is capable of generating an electrical signal corresponding to the light signal that falls on it. The read-out circuitry 28 collects the individual electrical signals to generate an analog image signal 36. The ADC 30 converts the analog image signal 36 to a digital image signal 38. The ADC 30 can be configured to receive and convert analog image signals at rates of about 30 frames per second that are typically referred to as real-time or near real-time rates.

The detector control circuitry 32 is configured to provide one or more detector operating parameters 40 to either the read-out circuitry 28 or the ADC unit 30 or both. The detector operating parameters 40 generally control the operation of either or both of the read-out circuitry 28 and the ADC unit 30. For example, the detector operating parameters 40 may specify, among other things, what kind of signals to look for, how to measure the signals, and what kind of operations are to be performed on the signals. Because of their contribution to the acquisition and processing of image data from the detector, the detector operating parameters 40 are very useful in determining the final output from the imaging system 10. Examples of detector operational parameters include sampling rates, ADC conversion ramps, gain, timing of associated digital conversion, binning modes, and pixel acceptance or rejection. In certain implementations of the present technique, the detector control circuitry may also be configured to adjust the exposure time of the detector to the radiation 20.

The detector adjustment circuitry 34 receives the digital image signal 38 as an input from the ADC 30. Based on the digital image signal 38, the detector adjustment circuitry 34 sends control signals 42 to the detector control circuitry 32 to alter the one or more detector operational parameters 40, thereby altering the operation of the readout circuitry 28 and/or ADC 30. In addition, in the exemplary embodiment, the detector adjustment circuitry 34 is configured to receive user parameters 44 as an input. The user parameters 44 may configure the operation of the detector adjustment circuitry 34, such as specifying what control signals 42 to generate based upon a given digital image signal 38. The user inputs are provided via a processor assembly 16, such as an image processing workstation, which would be discussed in greater detail herein below.

In the exemplary embodiment of Fig. 1, the processor assembly 16 includes configuration circuitry 46, and image processing circuitry 48. The configuration circuitry 46 generates or provides the user parameters 44 that provide for further optimization of the generated digital image signal 38. ln particular, the configuration circuitry 46 may generate or provide the user parameters 44 based on an input by a system operator via an input device, such as a mouse or keyboard, or based on a preconfigured or user specified protocol or look-up table. The image processing circuitry 48 processes the digital image signal 38 to generate an image 50 of the object 22 that is then displayed on an appropriate display unit 18. A system operator may view the generated image 50 and select one or more portions of the image 50 for further optimization by the imaging system 10.

The following section describes a useful and non-limiting example of application of the present technique in order to provide a better insight into and understanding of the advantages of using the exemplary imaging system 10.

Consider an industrial X-ray imaging system designed to operate under principles of the present technique. In such an application, a system operator would not necessarily have a prior knowledge of an industrial object under inspection. lnstead of being required to set and re-set the imaging system's detector operating parameters each time until a desired image of the object with good spatial resolution and clarity is obtained, the system operator may perform a simple preliminary imaging of the industrial object using X-rays (as the radiation 20), select any appropriate regions in the image of the industrial object (the object 22), and provide inputs (the user parameters 44) in the form of expected variation in the object. Based on the inputs, the industrial X-ray imaging system may dynamically compute and automatically alter (the adjustments 42) the appropriate conversion ramps, energy and/or flux of the X-ray radiation, or other imaging parameters (operating parameters 40) that result in the generation of an image of desired resolution and quality. In this manner, detector and other system performance parameters may be adjusted automatically based on the digital image signal. For example, in this manner, adjustments may be made that are reflected in the displayed image in substantially real time, such as within five seconds in one embodiment and within one second in yet another embodiment. Therefore, image quality issues that may be discerned in the digital image signal may automatically result in adjustment to the detector or other system configurations to allow for rapid and automatic improvement of the displayed image, such as in less than one second. In this manner, changes in the digital image signal, such as due to the relative motion of the imaged object may be accounted for in real-time or near real-time to maintain the desired image quality.

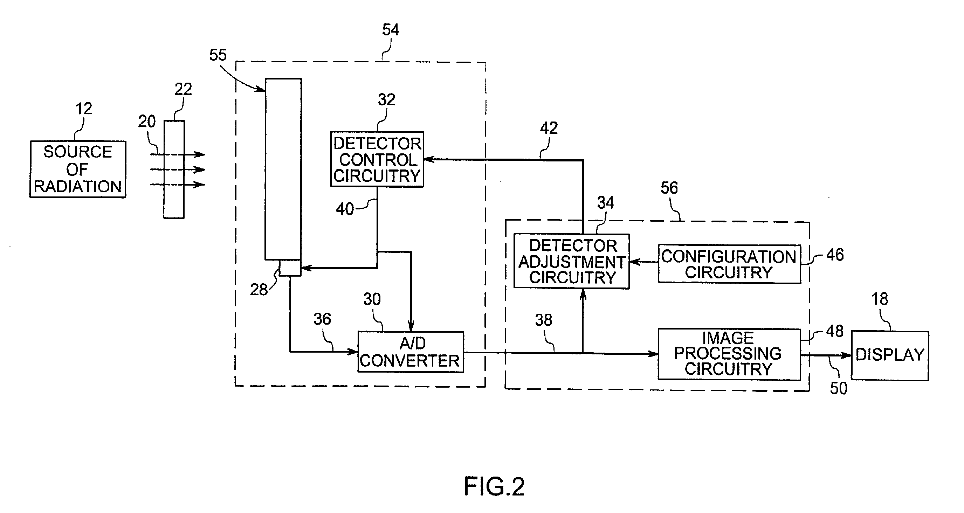

Referring now to Fig. 2, another exemplary embodiment of the present technique is provided. In this exemplary embodiment illustrated in Fig. 2, the imaging system 52 includes a detector assembly 54, a processor assembly 56 (such as an image processing workstation), and a display 18. The detector assembly 54 includes a detector unit 55, the read-out circuitry 28, and the ADC 30. To illustrate the interchangeability of detectors working on direct and indirect conversion principles in the present technique, the embodiment of Fig. 2 includes a direct conversion type detector unit 55. The detector unit 55 provides a direct conversion of radiation incident on the detector unit into discernible electrical signals that are taken up for further processing. By direct conversion, it is meant that the radiation incident on the detector unit surface is not converted to any intermediate signal and then transformed into electrical signals as illustrated in the exemplary embodiment shown previously in FIG. 1. While the present embodiment uses a different detector unit 55, it should be well appreciated by a person of ordinary skill in the art that either of the detector units 23 and 55 (as illustrated in FIG.1 and FIG. 2) may be used interchangeably in either of the embodiments.

In addition, unlike the embodiment depicted in Fig. 1, the detector adjustment circuitry 34 in the embodiment of Fig. 2 is included in the processor assembly 56 along with the configuration circuitry 46 and the image processing circuitry 48. In this embodiment, therefore, the adjustments 30 may be generated, based on the digital image signal 38, outside of or remote from the detector assembly 54. In both the exemplary embodiments of Figs. 1 and 2, the object 22 may be inspected in substantially real-time, as noted above, to generate the image 50.

ln some embodiments of the present technique, the imaging system may, at a direction of the system operator, perform a dynamic and continuous adjustment of the image to optimize subsequent frames of the image based on the mean image signal levels of the image. In this embodiment, the system operator may provide information as a user parameter 40 about a specific standard deviation of the image signal levels or a range of values between which the image signal could vary and be measured. This information is then provided to the imaging system via the processor assembly and the detector adjustment circuitry to the detector control circuitry to alter one or more detector operating parameters.

Advantages of using the present technique include automatic optimization and control of image quality. Due to its automatic nature, such optimization may be in substantially real time. Furthermore, in some embodiments the present technique provides for quantitative optimization of one or more operating parameters based on qualitative and quantitative metrics, simplified user interaction with the imaging system, prolonged life of the detector assembly due to reduced damage from radiation, and an increased performance of the detector assembly.

As will be appreciated by those of ordinary skill in the art, existing imaging systems may be modified to operate in accordance with the described embodiments and methods. In particular, an imaging system may be modified by installing detector adjustment circuitry, in the form of hardware, software, or a combination of hardware and software, onto at least one of a currently installed detector assembly and/or a processor assembly. For example, an imaging system may be modified by installing a detector adjustment program or routine on a detector assembly or processor assembly, as discussed herein. The detector adjustment program or routine may be configured to dynamically adjust one or more detector operating parameters of at least the photodetector assembly, the readout circuitry, or the ADC in response to a digital image signal.

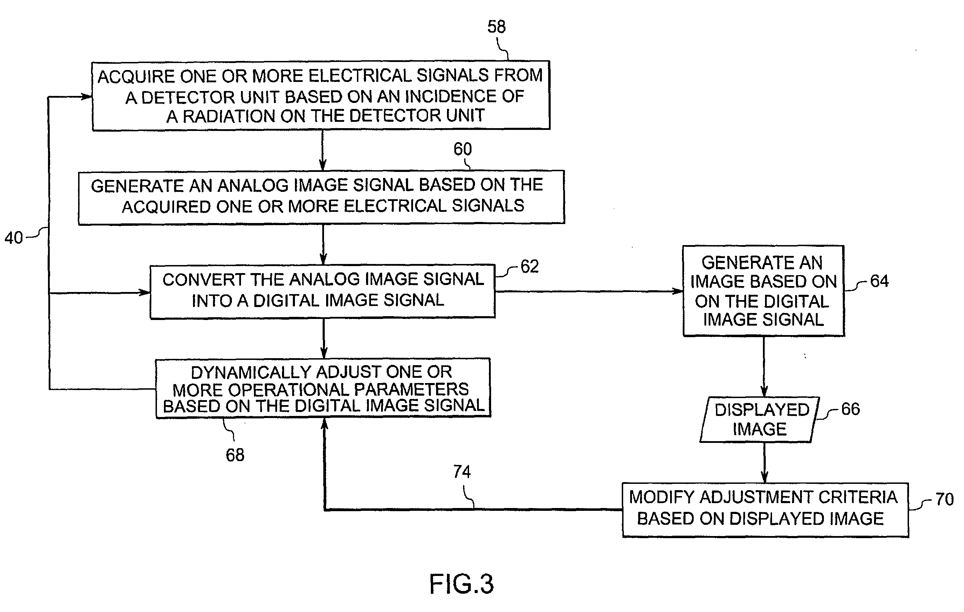

In accordance with certain aspects of the present technique, an exemplary method for adjusting one or more operating parameters in an imaging system (example as illustrated in FIG. 1 and FIG. 2) is illustrated in FIG. 3. The method consists of acquiring, at step 58, one or more electrical signals from a detector unit based on an incidence of a radiation on the detector unit. At step 60, an analog image signal is generated based on the electrical signals acquired from the detector unit. At step 62, the analog image signal is converted into a digital image signal via the ADC (as illustrated in FIG. 1 and described previously). Based on the digital image signal, one or more operating parameters 40 of the acquisition step 58 and/or the conversion step 62 is adjusted based on preconfigured or operator selected image quality characteristics, as depicted at step 68. In addition, the digital image signal may be processed to generate an image 66 for display at step 64.

In one embodiment, an operator adjusts or modifies the dynamic adjustment process performed at step 68 via one or more operator inputs 74 generated in response to the displayed image 66, as depicted at step 70. For example, an operator input 74 may indicate a region of interest selected by the operator from the image 66. Based upon this operator input 74, the dynamic adjustment step 68 may differentially process all or part of the current and future digital image signals. Alternatively, the operator input 74 may modify or adjust thresholds, viewing modes, or other image quality characteristics that affect what operating parameters 40 are adjusted at step 68. In this manner, an operator may interact with the automatic adjustment technique described herein to automatically achieve a desired image quality or enhancement, as described in greater detail below.

While the preceding discussion provides a general description of several embodiments of the present technique, the following examples are provided to further assist in understanding the technique. It will be appreciated that the following examples are provided only to facilitate understanding and are not intended to define an exclusive or exhaustive list of possible implementations or to otherwise limit the scope of the disclosure.

For example, in one embodiment, the operating parameter 40 may adjust a binning mode of the readout circuitry 28 (referring once again to Fig. 1). As will be appreciated by those of ordinary skill in the arts, binning is the process of combining charge from adjacent pixels. This process is performed prior to digitization in the on-chip circuitry. The two primary benefits of binning are improved signal-to-noise ratio (SNR) and the ability to increase frame rate, i.e., the number of frames or images that are projected or displayed in unit time, usually specified in frames per second. For example, binning mode of 1x1 means that the electrical signal from each photoreceiver unit is used as is. A binning mode of 2x2 means that electrical signals from four adjacent photodetector units are combined into one larger electrical signal. Based on the quality or characteristics of the digital image signal, relative to some preconfigured or operator-selected threshold, an operating parameter 40 may be sent to the read out circuitry 28 that adjusts the binning mode of the read out circuitry 28 to achieve the desired quality or characteristic in the digital image signal.

Alternatively, in another embodiment, the operational parameter 40 generated in response to the digital image signal may adjust the operation of the ADC 30. For example, the operational parameter 40 may specify the threshold above which the analog image signal 36 may be characterized as a digital high (logical 1) and below which the analog image signal 36 would be characterized as a digital low (logical 0). In this manner, the contrast of images generated from the digital image signal may be adjusted to a desired level.

In another exemplary embodiment, the detector operational parameters 40 may configure the read-out circuitry 28 to reject or skip unacceptable pixels or to otherwise modify the readout of such pixels. ln other words, the operation parameter 40 may dynamically update or revise an unacceptable pixel map governing the operation of the read out circuitry 28. ln this manner, the quality or characteristics of the digital image signal may be used to dynamically modify the unacceptable pixel map controlling read out by the read out circuitry 28.

In another embodiment, an operational parameter 40 may be sent to the readout circuitry 28 to adjust the bias of all or part of an array of photodiodes. In this manner, based on the digital image signal 38, an automatic adjustment may be made to the dynamic range of the pixels. Such an adjustment may be desirable to prevent saturation of the readout electronics and/or to maintain a desired dynamic range.

In a further embodiment, an operational parameter 40 may be sent to the ADC 30, based on the quality or characteristics of the digital image signal, to adjust the ADC ramp governing the conversion factors used in converting analog measurements to digital values. For example, the operation parameter 40 may automatically adjust the quantization step size throughout all or part of the ADC conversion ramp. In one embodiment, the operational parameter 40 may adjust the ADC ramp to minimize or reduce quantization noise while maintaining the desired dynamic range. In another embodiment, the operational parameter 40 may adjust the ADC ramp to maintain a desired frame rate while maintaining the desired dynamic range.

In an additional embodiment, the operational parameter 40 may be generated based on the digital image signal and on an operator-selected mode. For example, the operational parameter 40 may facilitate switching between operator specified or preconfigured modes, such as a wide-dynamic range mode and a low-noise mode, based upon the quality or characteristics of the digital image signal. In such an embodiment, characteristics such as noise, contrast, signal strength, and so forth, may determine the viewing mode, and thereby the type of operational parameter 40 generated.

In a further embodiment, the operational parameter 40 may be generated in a dual or multi-energy imaging system where projection data is acquired by a detector for two or more X-ray energy profiles. In such an embodiment, the detector may be a conventional detector or an energy discriminating detector. In this embodiment, the operational parameter 40 may adjust the operation of the readout circuitry 28 to achieve the best image quality for projection images acquired at each X-ray energy profile.

In another embodiment, an operator may select a particular region of interest in the image 50 for differential imaging or processing such that the detector characteristics or other system parameters are adapted to enhance or improve images generated of the region of interest. For example, based upon the selected region of interest, the operational parameters 40 sent to the read out circuitry 28 or ADC 30 may be selected to optimize the signal-to-noise ratio or the contrast-to-noise ratio for the selected region. For example, operational parameters 40 associated with the read out of the region of interest may be adjusted, such as in the manners described above, to achieve a desired resolution, signal strength, noise, contrast, or other image quality characteristic, within a selected region of interest.

These regions or characteristics may be selected by automated routines or algorithms. For example, in one embodiment, a computer vision application, a computer-assisted detection (CAD) routine, or an automatic defect recognition (ADR) routine selects one or more regions of interest for differential image improvement or configures one or more thresholds for image quality which result in respective adjustments to the operational parameters 40 controlling image acquisition, as described throughout. As will be appreciated by those of ordinary skill in the art, automated analysis routines, such as CAD and ADR routines, may perform many of the functions of a human operator, such as selecting regions of interest and setting image quality thresholds and standards, and are, therefore, encompassed by the term "operator" as used herein.

As described above, in accordance with the present technique, software code, routines, or algorithms may be used to adjust at least one of an act of reading out electrical signals from the photodetector assembly to generate an analog image signal or an act of converting the analog image signal to a digital image signal based on the analog image signal. The code may be used to analyze the digital image signal and to generate one or more images based on the digital signal. The code may also be used to provide user inputs from a system operator to provide for further optimization of the generated image.

The various embodiments and aspects already described in the earlier sections may include an ordered listing of executable instructions for implementing various logical functions. The ordered listing can be embodied in any computer-readable medium for use by or in connection with a computer-based system that can retrieve the instructions and execute them. In the context of this application, the computer-readable medium can be any means that can contain, store, communicate, propagate, transmit or transport the instructions. The computer readable medium can be an electronic, a magnetic, an optical, an electromagnetic, or an infrared system, apparatus, or device. An illustrative, but non-exhaustive list of computer-readable mediums can include an electrical connection (electronic) having one or more wires, a portable computer diskette (magnetic), a random access memory (RAM) (magnetic), a read-only memory (ROM) (magnetic), an erasable programmable read-only memory (EPROM or flash memory) (magnetic), an optical fiber (optical), and a portable compact disc read-only memory (CDROM) (optical): Note that the computer readable medium may comprise paper or another suitable medium upon which the instructions are printed by mechanical and electronic means or be hand-written. For instance, the instructions can be electronically captured via optical scanning of the paper or other medium, then compiled, interpreted or otherwise processed in a suitable manner if necessary, and then stored in a computer readable memory.

As will be appreciated by those skilled in the art, the above-described embodiments of the imaging system and techniques provide efficient and enhanced ways of imaging an object under inspection by substantially altering the various operating parameters of the various circuitries in real time. The imaging system facilitates a reduced intervention from a system operator responsible for performing the imaging techniques and results in a reduced imaging time. Furthermore, due to the above-mentioned advantages, the present technique also prolongs the life of the radiation detector used in the imaging systems.

## Claims

1. An imaging system (10), comprising:
a source of radiation (12);
a detector unit (23) configured to generate an image signal, wherein one or more properties of the image signal are determined based on an incident radiation (20) on the detector and on one or more detector operational parameters (40); and
detector adjustment circuitry (34) configured to automatically adjust the one or more detector operational parameters (40) based on the image signal.

2. The imaging system as recited in claim 1, wherein the detector adjustment circuitry (34) is configured to adjust the one or more detector operational parameters (40) in substantially real time.

3. The imaging system (10) as recited in claim 1, wherein the source of radiation (12) comprises an X-ray source, a gamma ray source, a near-infrared radiation source, an infrared radiation source, an ultraviolet radiation source, an electromagnetic radiation source or a neutron beam source.

4. The imaging system (10) as recited in claim 1, wherein the detector adjustment circuitry (34) is configured to automatically adjust a binning mode of the detector unit (23) based on the image signal.

5. The imaging system (10) as recited in claim 1, wherein the detector adjustment circuitry (34) is configured to automatically adjust an analog to digital conversion ramp applied to the image signal.

6. The imaging system as recited in claim 1, wherein the detector adjustment circuitry (34) is configured to automatically adjust the exposure time of the detector unit to the radiation (20).

7. The imaging system as recited in claim 1, wherein the detector adjustment circuitry (34) is configured to automatically adjust the one or more detector operational parameters (40) based on the image signal and an operator selected viewing mode.

8. The imaging system as recited in claim 1, wherein the detector adjustment circuitry (34) is configured to automatically adjust the one or more detector operational parameters (40) for an operator selected region of interest within an image generated from the image signal.

9. The imaging system as recited in claim 1, wherein the detector operational parameters (34) include at least one of a sampling rate, an analog-to-digital conversion ramp, a timing of digital conversion, a gain in the digital conversion, a pixel rejection flag, a signal-to-noise ratio in the detector, or a contrast-to-noise ratio.

10. The imaging system as recited in claim 1, wherein the detector adjustment circuitry (34) performs a dynamic or a continuous adjustment of the image signal based on a direction of a system operator.
